# FASCICULE DE BREVET EUROPEEN

(11) **EP 3 947 951 B1**
(45) Date de publication et mention de la délivrance du brevet: **03.05.2023**
(21) Numéro de dépôt: 20731163.0
(22) Date de dépôt: 20.03.2020
(51) Int. Cl.: F02K 9/97

(54) **TUYÈRE ÉQUIPÉE D'UNE COURONNE THERMO-RÉGULÉE**
STRAHLDÜSE MIT EINEM THERMISCH REGULIERTEN RING
JET NOZZLE EQUIPPED WITH A THERMALLY REGULATED RING

(30) Priorité: 27.03.2019 FR 1903196
(43) Date de publication de la demande: 09.02.2022
(73) Titulaire: ArianeGroup SAS, 78130 Les Mureaux (FR)
(72) Inventeur: ZORRILLA, Xavier, 33185 LE HAILLAN (FR); LASSENAY, Florian, 33185 LE HAILLAN (FR)
(74) Mandataire: Cabinet Beau de Loménie
(86) Numéro de dépôt international: PCT/FR2020/050611
(87) Numéro de publication internationale: WO 2020/193925

(56) Documents cités:
- FR-A1- 2 503 794
- FR-A1- 2 828 911
- JP-A- 2006 249 935

## Description

### Domaine Technique

La présente invention concerne une tuyère de moteur-fusée comprenant une chambre de combustion et un divergent formé d'une paroi en forme de cône, le divergent étant relié à l'extrémité aval de la chambre de combustion par une bride ou couronne.

### Technique antérieure

Le document WO 2018/002523 divulgue une tuyère comprenant une chambre de combustion en matériau métallique présentant une extrémité aval et un divergent en matériau composite formé d'une paroi en forme de cône et dont l'extrémité amont du divergent en matériau composite est reliée à l'extrémité aval de la chambre de combustion par une bride annulaire en matériau métallique. L'extrémité aval de la chambre de combustion est munie d'un circuit de refroidissement permettant de réduire la température dans la zone de la chambre de combustion où est réalisée la fixation axiale avec le divergent.

Les documents JP2006249935 A, FR2503794 A1 et FR2828911 A1 divulguent des tuyères de l'art antérieur.

Cependant, la solution consistant à munir l'extrémité aval de la chambre de combustion d'un circuit de refroidissement complexifie la réalisation de la chambre de combustion ainsi que la géométrie de la bride annulaire permettant de fixer le divergent à la chambre.

En outre, si le circuit de refroidissement intégré à la chambre de combustion permet de réguler efficacement la température de ladite chambre, il ne permet pas de refroidir les éléments présents au voisinage de l'extrémité aval de la chambre comme la bride annulaire. Or, la bride annulaire est exposée à des températures très élevées en raison de sa proximité avec le divergent. Par conséquent, la bride annulaire doit être capable de résister à des températures élevées, ce qui implique l'utilisation de matériaux coûteux.

### Exposé de l'invention

L'invention a pour but de proposer une solution pour des tuyères ayant une régulation thermique plus efficace au niveau de la pièce de liaison entre la chambre de combustion et le divergent.

Ce but est atteint grâce à une tuyère présentant un axe longitudinal comprenant une chambre de combustion présentant une extrémité aval et un divergent formé d'une paroi en forme de cône s'étendant entre une extrémité amont et une extrémité aval, l'extrémité amont du divergent étant reliée à l'extrémité aval de la chambre de combustion par une couronne intermédiaire comprenant une bride amont fixée sur l'extrémité aval de la chambre de combustion et une bride aval reliée à l'extrémité amont du divergent, caractérisée en ce que la couronne intermédiaire comprend au moins un canal interne présent entre les brides amont et aval de la couronne intermédiaire et en ce qu'un matériau apte à prélever de la chaleur sur la couronne est présent dans le canal interne.

En réalisant le refroidissement de la liaison entre la chambre de combustion et le divergent directement au niveau de la couronne intermédiaire, on protège celle-ci de la chaleur émise par le divergent, ce qui améliore la fiabilité de la liaison entre la chambre de combustion et le divergent. Il est ainsi possible d'envisager une utilisation de la tuyère avec des températures de combustion élevées tout en pouvant utiliser des matériaux relativement bon marché pour la réalisation de la couronne intermédiaire. En outre, cette solution de refroidissement simplifie la géométrie de la chambre de combustion au niveau de son extrémité aval permettant d'envisager une liaison avec différents types de divergents.

Selon un aspect particulier de la tuyère selon l'invention, un fluide caloporteur circule dans ledit au moins un canal interne de la couronne intermédiaire. La couronne ainsi que la liaison réalisée par celle-ci est refroidie au moyen d'un circuit de refroidissement indépendant de celui de la chambre de combustion. Le débit et la nature du fluide caloporteur peuvent donc être choisis afin d'obtenir la meilleure régulation thermique. Ce circuit de refroidissement indépendant peut en outre être utilisé après l'extinction du moteur-fusée pour pallier les effets de réchauffement dus au phénomène appelé « heat soak back » en anglais qui correspond au réchauffement après fonctionnement de certains éléments par d'autres ayant une forte inertie thermique.

Selon une caractéristique particulière, le ou les canaux internes de la couronne intermédiaire présentent une géométrie apte à créer des tourbillons dans le fluide caloporteur. Cela permet d'augmenter les échanges thermiques et, par conséquent, le refroidissement de la couronne et des parties environnantes.

Selon un autre aspect particulier de la tuyère selon l'invention, un matériau à changement de phase est présent dans ledit au moins un canal interne de la couronne intermédiaire. Dans ce cas, le transfert thermique (refroidissement) est réalisé par chaleur latente, le matériau à changement de phase pouvant stocker l'énergie par simple changement d'état tout en conservant une température constante. La couronne ainsi que la liaison réalisée par celle-ci est maintenue à des niveaux de températures acceptables et de manière indépendante par rapport au circuit de refroidissement de la chambre de combustion. Les propriétés du matériau à changement de phase peuvent être définies en fonction du seul besoin de refroidissement au niveau de la couronne intermédiaire. Le refroidissement réalisé par le matériau à changement de phase peut en outre être utilisé après l'extinction du moteur-fusée pour pallier les effets de réchauffement dus au phénomène appelé « heat soak back » en anglais qui correspond au réchauffement après fonctionnement de certains éléments par d'autres ayant une forte inertie thermique.

Selon un autre aspect particulier de la tuyère de l'invention, la bride aval de la couronne intermédiaire est fixée à l'extrémité amont du divergent par des organes de serrage.

Selon encore un autre aspect de la tuyère de l'invention, la bride aval de la couronne intermédiaire comporte des pattes de support, lesdites pattes coopérant avec un ou plusieurs épaulements présents sur l'extrémité amont du divergent. On limite ainsi les surfaces d'échange thermique entre le divergent et la couronne en minimisant la surface de contact entre ces deux éléments.

Selon une caractéristique particulière de ce mode de liaison, la couronne intermédiaire comprend sur sa face en regard de la paroi du divergent des bossages espacés les uns des autres suivant une direction circonférentielle. On facilite ainsi le centrage radial du divergent sur la couronne intermédiaire.

Le divergent peut être notamment en matériau métallique ou en matériau composite.

### Brève description des dessins

[Fig. 1] La figure 1 est une vue schématique d'une tuyère selon un mode de réalisation de l'invention,
[Fig. 2] La figure 2 est une vue schématique en coupe montrant la liaison entre la chambre de combustion et le divergent de la tuyère de la figure 1,
[Fig. 3] La figure 3 est une vue schématique d'une tuyère selon un autre mode de réalisation de l'invention,
[Fig. 4] La figure 4 est une vue schématique en perspective montrant la couronne intermédiaire de la tuyère de la figure 3,
[Fig. 5] La figure 5 est une vue schématique en coupe montrant la liaison entre la chambre de combustion et le divergent de la tuyère de la figure 4,
[Fig. 6] La figure 6 est une autre vue schématique en coupe montrant la liaison entre la chambre de combustion et le divergent de la tuyère de la figure 4.

### Description des modes de réalisation

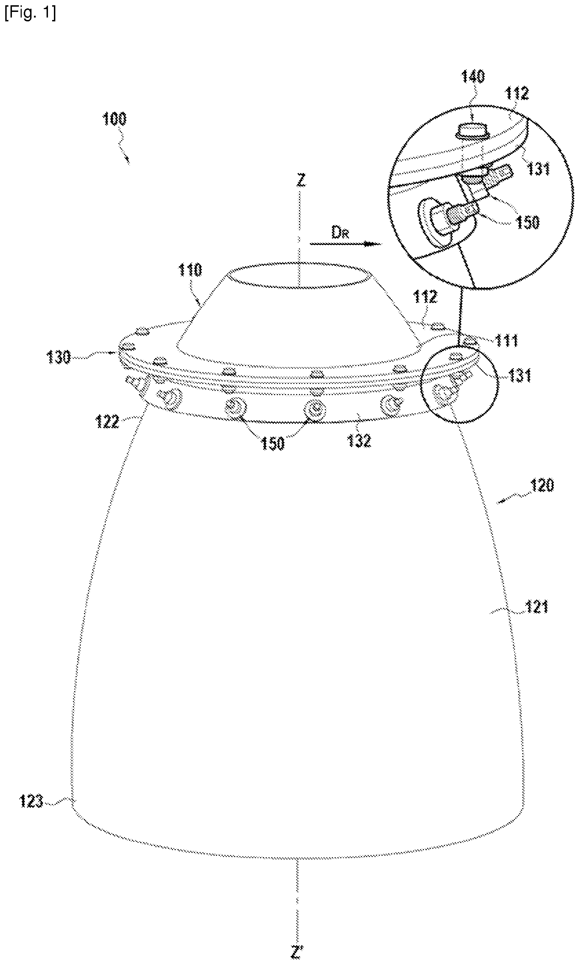

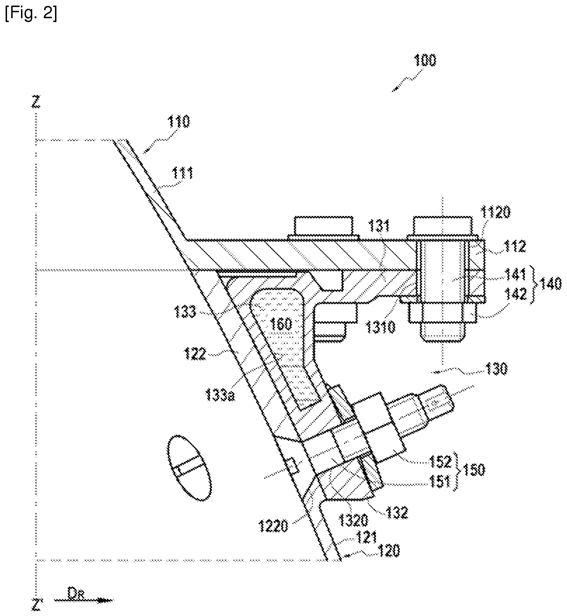

Les figures 1 et 2 illustrent une tuyère 100 de moteur-fusée conformément à un mode de réalisation de l'invention. La tuyère 10 d'axe longitudinal ZZ' comprend une chambre de combustion en matériau métallique 110 présentant une extrémité aval 111 et un divergent 120 formée d'une paroi 121 en forme de cône s'étendant entre une extrémité amont 122 et une extrémité aval 123, l'extrémité amont 122 du divergent 120 étant reliée à l'extrémité aval 111 de la chambre de combustion 110. La chambre de combustion 110 comprend en outre un circuit de refroidissement permettant de faire circuler un fluide de refroidissement en paroi de la chambre (non représenté sur les figures 1 et 2) comme c'est le cas notamment d'une chambre de combustion dite « à régénération ».

Conformément à l'invention, la tuyère 100 comprend en outre une couronne intermédiaire 130 qui assure la liaison entre la chambre de combustion 110 et le divergent 120. La couronne intermédiaire 130 comprend une bride amont 131 qui s'étend suivant une direction radiale D_{R} perpendiculaire à l'axe longitudinal ZZ' et qui coopère avec une bride de fixation 112 s'étendant suivant la direction radiale à l'extrémité aval 111 de la chambre de combustion 110. La bride amont 131 de la couronne intermédiaire 130 est fixée à la bride de fixation 112 de la chambre de combustion par une pluralité d'organes de serrage 140 comprenant chacun une vis de fixation 141 et un écrou 142, chaque vis de fixation 141 traversant un orifice 1120 présent sur la bride de fixation 112 et un orifice 1310 présent sur la bride amont 131.

La couronne intermédiaire 130 comprend une bride aval 132 qui est fixée à l'extrémité amont 122 du divergent 120 par une pluralité d'organes de serrage 150 comprenant chacun une vis de fixation 151 et un écrou 152, chaque vis de fixation 151 traversant un orifice 1320 présent sur la bride aval 132 et un orifice 1220 présent l'extrémité amont 122 du divergent 120.

Conformément à l'invention, la couronne intermédiaire 130 comprend en outre un canal interne 133 présent entre la bride amont 131 et la bride aval 132. Dans l'exemple décrit ici, le canal interne s'étend de manière annulaire et forme un circuit de circulation pour un fluide caloporteur 160 qui circule dans le canal 133 entre une entrée et une sortie (non représentées sur les figures 1 et 2). Un système de pompage et d'échangeur thermique (non représenté sur les figures 1 et 2) indépendant de celui utilisé pour le circuit de refroidissement de la chambre de combustion est connecté entre l'entrée et la sortie du canal interne afin d'assurer la circulation en continu du fluide caloporteur et la thermorégulation de la couronne intermédiaire 130. La régulation thermique de la couronne intermédiaire et des éléments thermiquement en contact avec celle-ci est ainsi réalisée par un dispositif de refroidissement indépendant de celui de la chambre de combustion. Le débit et la nature du fluide caloporteur peuvent donc être choisis afin d'obtenir la meilleure régulation thermique. Ce circuit de refroidissement indépendant peut en outre être utilisé après l'extinction du moteur-fusée pour pallier les effets de réchauffement dus au phénomène appelé « heat soak back » en anglais qui correspond au réchauffement après fonctionnement de certains éléments par d'autres ayant une forte inertie thermique.

Selon une caractéristique particulière, le canal interne 133 présente une géométrie apte à créer des tourbillons (« swirl ») permettant d'augmenter les échanges thermiques et, par conséquent, le refroidissement de la couronne et des parties environnantes.

Les échanges thermiques, en particulier convectifs, peuvent en outre être améliorés en structurant la surface interne 133a du canal 133, par exemple en y formant des porosités ou des cavités ouvertes sur ladite surface interne. Cette structuration peut être obtenue en réalisant la couronne intermédiaire par fabrication additive.

Selon une variante de réalisation, le canal interne 133 de la couronne intermédiaire est rempli avec un matériau à changement de phase à la place du fluide caloporteur. Dans ce cas, le canal interne n'est plus relié à un système de pompage et d'échangeur thermique, car le matériau à changement de phase est présent de façon statique dans le canal interne. Au moins une vanne de remplissage/vidange (non représentée sur les figures 1 et 2) est prévue à la place de l'entrée et de la sortie du canal interne. Dans ce cas, le transfert thermique (refroidissement) est réalisé par chaleur latente, le matériau à changement de phase pouvant stocker l'énergie par simple changement d'état tout en conservant une température constante. La couronne ainsi que la liaison réalisée par celle-ci est refroidie de manière indépendante par rapport au circuit de refroidissement de la chambre de combustion. Les propriétés du matériau à changement de phase peuvent être définies en fonction du seul besoin de refroidissement au niveau de la couronne intermédiaire. Le refroidissement réalisé par le matériau à changement de phase peut en outre être utilisé après l'extinction du moteur-fusée pour pallier les effets de réchauffement dus au phénomène appelé « heat soak back » en anglais qui correspond au réchauffement après fonctionnement de certains éléments par d'autres ayant une forte inertie thermique.

Le matériau à changement de phase peut être notamment de la paraffine ou de l'eau.

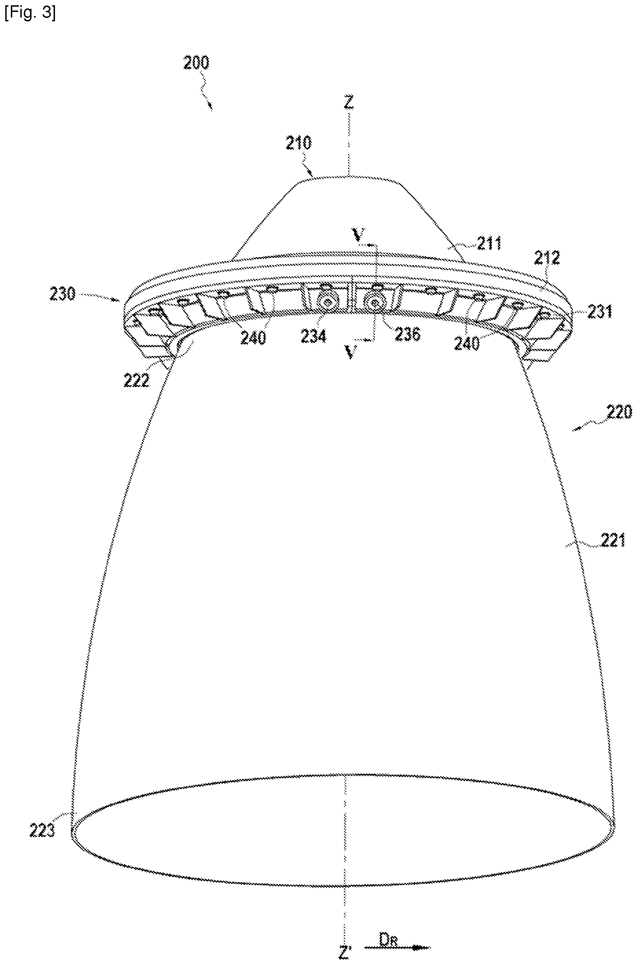

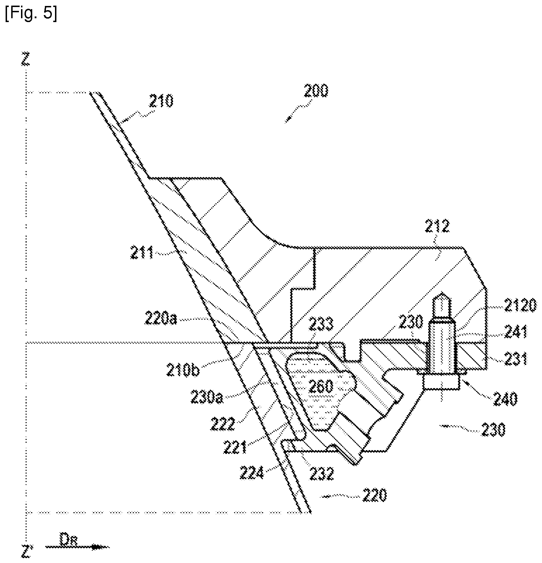

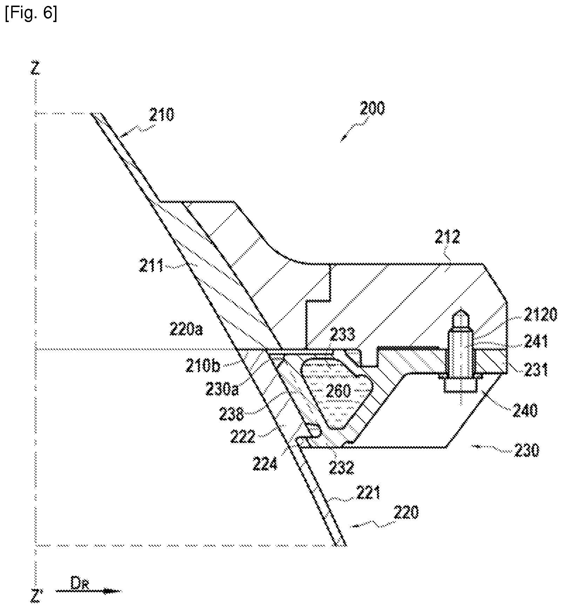

Les figures 3 à 6 illustrent un autre mode de réalisation d'une tuyère selon l'invention qui diffère de la tuyère 100 décrite précédemment notamment au niveau de la liaison entre la couronne intermédiaire et le divergent. Plus précisément, sur la figure 3, la tuyère 200 d'axe longitudinal ZZ' comprend une chambre de combustion en matériau métallique 210 présentant une extrémité aval 211 et un divergent 220 formée d'une paroi 221 en forme de cône s'étendant entre une extrémité amont 222 et une extrémité aval 223, l'extrémité amont 222 du divergent 220 étant reliée à l'extrémité aval 211 de la chambre de combustion 210. La chambre de combustion 210 comprend en outre un circuit de refroidissement permettant de faire circuler un fluide de refroidissement en paroi de la chambre (non représenté sur les figures 3 à 6).

La tuyère 200 comprend en outre une couronne intermédiaire 230 qui assure la liaison entre la chambre de combustion 210 et le divergent 220. La couronne intermédiaire 230 comprend une bride amont 231 qui s'étend suivant une direction radiale DR perpendiculaire à l'axe longitudinal ZZ' et qui coopère avec une bride de fixation 212 s'étendant suivant la direction radiale à l'extrémité aval 211 de la chambre de combustion 210. La bride amont 231 de la couronne intermédiaire 230 est fixée à la bride de fixation 212 de la chambre de combustion par une pluralité d'organes de serrage 240 comprenant chacun une vis de fixation 241. Chaque vis de fixation 241 traverse un orifice 2310 présent sur la bride amont 231 et est vissée dans un alésage taraudé 2120 présent sur la bride de fixation 212.

Dans l'exemple décrit ici, la bride aval de la couronne intermédiaire 230 est constituée par des pattes de support 232 espacées les unes des autres suivant une direction circonférentielle D_{C}. Les pattes de support 232 s'étendent depuis la face interne 230a de la couronne 230 en regard de la paroi 221 du divergent 220 suivant la direction radiale D_{R}. Les pattes de support 232 coopèrent avec un épaulement annulaire 224 présent sur la paroi 221 du divergent au niveau de son extrémité amont 222. Une fois la couronne intermédiaire 230 fixée sur la chambre de combustion 210 et les pattes de support 232 en contact avec l'épaulement 224, la partie proximale 220a du divergent 220 est maintenue en appui sur la partie distale 210b de la chambre de combustion 210 assurant ainsi une continuité entre les surfaces internes de la chambre de combustion et du divergent.

Dans l'exemple décrit ici, la couronne intermédiaire 230 comprend sur sa face interne 230a en regard de la paroi 221 du divergent 220 des bossages 238 espacés les uns des autres suivant la direction circonférentielle D_{C}. On facilite ainsi le centrage radial du divergent sur la couronne intermédiaire.

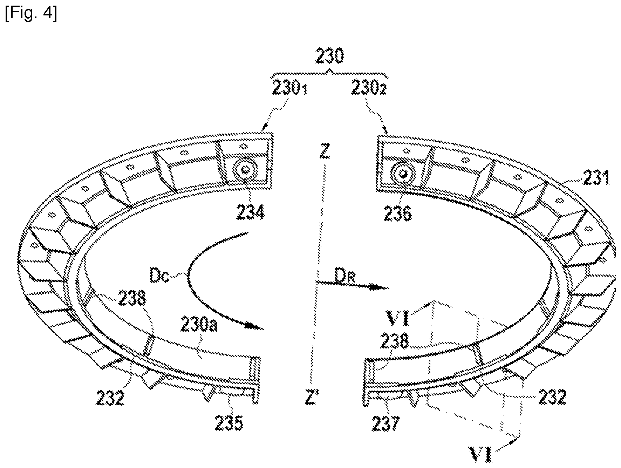

Conformément à l'invention, la couronne intermédiaire 230 comprend en outre un canal interne 233 présent entre la bride amont 231 et la bride aval 232. Dans l'exemple décrit ici, le canal interne s'étend de manière annulaire et forme un circuit de circulation pour un fluide caloporteur 260 qui circule dans le canal 233 entre une entrée 234, 236 et une sortie 235, 237 (figure 4). Un système de pompage et d'échangeur thermique (non représenté sur les figures 3 à 6) indépendant de celui utilisé pour le circuit de refroidissement de la chambre de combustion est connecté entre l'entrée et la sortie du canal interne afin d'assurer la circulation en continu du fluide caloporteur et la thermorégulation de la couronne intermédiaire 230. La régulation thermique de la couronne intermédiaire et des éléments thermiquement en contact avec celle-ci est ainsi réalisée par un dispositif de refroidissement indépendant de celui de la chambre de combustion. Le débit et la nature du fluide caloporteur peuvent donc être choisis afin d'obtenir la meilleure régulation thermique. Ce circuit de refroidissement indépendant peut en outre être utilisé après l'extinction du moteur-fusée pour pallier les effets de réchauffement dus au phénomène appelé « heat soak back » en anglais qui correspond au réchauffement après fonctionnement de certains éléments par d'autres ayant une forte inertie thermique.

Selon une caractéristique particulière, le canal interne 233 présente une géométrie apte à créer des tourbillons (« swirl ») permettant d'augmenter les échanges thermiques et, par conséquent, le refroidissement de la couronne et des parties environnantes.

Les échanges thermiques, en particuliers convectifs, peuvent en outre être améliorés en structurant la surface interne 233a du canal 133, par exemple en y formant des porosités ou des cavités ouvertes sur ladite surface interne. Cette structuration peut être obtenue en réalisant la couronne intermédiaire par fabrication additive.

Selon une variante de réalisation, le canal interne 233 de la couronne intermédiaire est rempli avec un matériau à changement de phase à la place du fluide caloporteur. Dans ce cas, le canal interne n'est plus relié à un système de pompage et d'échangeur thermique, car le matériau à changement de phase est présent de façon statique dans le canal interne. Au moins une vanne de remplissage/vidange (non représentée sur les figures 3 à 6) est prévue à la place de l'entrée 234, 236 et de la sortie 235, 237 du canal interne 233. Dans ce cas, le transfert thermique (refroidissement) est réalisé par chaleur latente, le matériau à changement de phase pouvant stocker l'énergie par simple changement d'état tout en conservant une température constante. La couronne ainsi que la liaison réalisée par celle-ci est refroidie de manière indépendante par rapport au circuit de refroidissement de la chambre de combustion. Les propriétés du matériau à changement de phase peuvent être définies en fonction du seul besoin de refroidissement au niveau de la couronne intermédiaire. Le refroidissement réalisé par le matériau à changement de phase peut en outre être utilisé après l'extinction du moteur-fusée pour pallier les effets de réchauffement dus au phénomène appelé « heat soak back » en anglais qui correspond au réchauffement après fonctionnement de certains éléments par d'autres ayant une forte inertie thermique.

Dans l'exemple décrit ici, la couronne intermédiaire 233 est formée de deux demi-couronnes 233₁ et 233₂ comprenant chacune respectivement une entrée 234, 236 et une sortie 235, 237 pour la circulation du fluide caloporteur. Les entrées 234, 236 et les sorties 235, 237 étant remplacées par des vannes de remplissage/vidange en cas d'utilisation d'un matériau à changement de phase à la place d'un fluide caloporteur.

Par ailleurs, dans l'exemple décrit ici, les pattes de support 232 sont espacées les unes des autres par interruption de matière entre les pattes. Toutefois, les pattes 232 peuvent également être réalisées avec un anneau continu présent en saille de la surface interne 230a de la couronne intermédiaire 233. De même, l'épaulement 224 est continu dans le présent exemple. Selon une variante de réalisation, l'épaulement pourrait être discontinu afin de former une pluralité d'épaulements espacés les uns des autres autour de l'extrémité amont du divergent.

Le divergent de la tuyère de l'invention peut être en matériau métallique ou en matériau composite. Le divergent peut être en particulier réalisé en matériau composite à matrice céramique (CMC) qui, de façon connue, est un matériau formé d'un renfort en fibres de carbone ou céramique densifié par une matrice au moins partiellement céramique, comme l'un des matériaux composite CMC suivants :
- carbone-carbone/carbure de silicium (C/C-SiC) correspondant à un matériau formé d'un renfort en fibres de carbone et densifié par une matrice comprenant une phase carbone et une phase carbure de silicium,
- carbone-carbure de silicium (C/SiC) qui est un matériau formé d'un renfort en fibres de carbone densifié par une matrice en carbure de silicium,
- carbure de silicium-carbure de silicium (SiC/SiC) correspondant à un matériau formé d'un renfort en fibres de carbure de silicium densifié par une matrice en carbure de silicium,
- matériau CMC de type oxyde/oxyde correspondant à un matériau formé d'un renfort en fibres d'oxyde réfractaire, par exemple des fibres à base d'alumine Al₂O₃, densifié par une matrice en oxyde réfractaire.

Le divergent peut également être réalisé en matériau composite carbone/carbone (C/C) qui, de façon connue, est un matériau formé d'un renfort en fibres de carbone densifié par une matrice en carbone et qui peut éventuellement être muni d'un revêtement comme par exemple un dépôt céramique (exemple SiC).

Grâce à la couronne intermédiaire thermo-régulée de l'invention, il est possible d'envisager des températures de fonctionnement plus élevées pour la tuyère ainsique l'utilisation de matériaux ayant des températures maximales d'utilisation inférieures aux températures vues par le divergent tels que des alliages de type Inconel^{®}. La régulation thermique de la couronne intermédiaire permet en outre de réduire le gradient de température entre le divergent et la chambre de combustion refroidie.

## Revendications

1. Tuyère (100) présentant un axe longitudinal (ZZ') comprenant une chambre de combustion (110) présentant une extrémité aval (111) et un divergent (120) formé d'une paroi (121) en forme de cône s'étendant entre une extrémité amont (122) et une extrémité aval (123), l'extrémité amont (122) du divergent étant reliée à l'extrémité aval (111) de la chambre de combustion par une couronne intermédiaire (130) comprenant une bride amont (131) fixée sur une bride de fixation (112) solidaire de la chambre de combustion (110) et une bride aval (132) reliée à l'extrémité amont (122) du divergent (120), **caractérisée en ce que** la couronne intermédiaire (130) comprend au moins un canal interne (133) présent entre les brides amont et aval (131, 132) de la couronne intermédiaire (130) et **en ce qu'**un matériau apte à prélever de la chaleur sur la couronne est présent dans ledit au moins un canal interne (133).

2. Tuyère selon la revendication 1, dans laquelle un fluide caloporteur (160) circule dans ledit au moins un canal interne (133) de la couronne intermédiaire (130).

3. Tuyère selon la revendication 2, dans laquelle ledit au moins un canal interne (133) présente une géométrie apte à créer des tourbillons dans le fluide caloporteur (160).

4. Tuyère selon la revendication 1, dans laquelle un matériau à changement de phase est présent dans ledit au moins un canal interne (133) de la couronne intermédiaire (130).

5. Tuyère selon l'une quelconque des revendications 1 à 4, dans laquelle la bride aval (132) de la couronne intermédiaire (130) est fixée à l'extrémité amont (122) du divergent (120) par des organes de serrage (150).

6. Tuyère selon l'une quelconque des revendications 1 à 4, dans laquelle la bride aval de la couronne intermédiaire comporte des pattes de support (232), lesdites pattes coopérant avec un ou plusieurs épaulements (224) présents sur l'extrémité amont (222) du divergent (220).

7. Tuyère selon la revendication 6, dans laquelle la couronne intermédiaire (230) comprend sur sa face (230a) en regard de la paroi (221) du divergent (220) des bossages (238) espacés les uns des autres suivant une direction circonférentielle (DC).

8. Tuyère selon l'une quelconque des revendications 1 à 7, dans laquelle le divergent est en matériau métallique ou en matériau composite.

## Patentansprüche

1. Strahldüse (100), die eine Längsachse (ZZ') aufweist, die eine Brennkammer (110) umfasst, die ein stromabwärtiges Ende (111) und ein Divergent (120) aufweist, das von einer konusförmigen Wand (121) gebildet ist, die sich zwischen einem stromaufwärtigen Ende (122) und einem stromabwärtigen Ende (123) erstreckt, wobei das stromaufwärtige Ende (122) des Divergents mit dem stromabwärtigen Ende (111) der Brennkammer (110) durch einen Zwischenring (130) verbunden ist, der einen stromaufwärtigen Flansch (131) umfasst, der an einem Befestigungsflansch (112) befestigt ist, der mit der Brennkammer (110) fest verbunden ist, und einen stromabwärtigen Flansch (132), mit dem stromaufwärtigen Ende (122) des Divergents (120) verbunden ist, **dadurch gekennzeichnet, dass** der Zwischenring (130) mindestens einen inneren Kanal (133) umfasst, der zwischen dem stromaufwärtigen und stromabwärtigen Flansch (131, 132) des Zwischenrings (130) vorhanden ist und dass ein Material, das imstande ist, vom Ring Wärme abzuleiten, in dem mindestens einen inneren Kanal (133) vorhanden ist.

2. Strahldüse nach Anspruch 1, wobei ein Wärmeträgerfluid (160) in dem mindestens einen inneren Kanal (133) des Zwischenrings (130) zirkuliert.

3. Strahldüse nach Anspruch 2, wobei der mindestens eine innere Kanal (133) eine Geometrie aufweist, die imstande ist, in dem Wärmeträgerfluid (160) Wirbelströme zu bilden.

4. Strahldüse nach Anspruch 1, wobei ein Phasenwechselmaterial in dem mindestens einen inneren Kanal (133) des Zwischenrings (130) vorhanden ist.

5. Strahldüse nach einem der Ansprüche 1 bis 4, wobei der stromabwärtige Flansch (132) des Zwischenrings (130) am stromaufwärtigen Ende (122) des Divergents (120) durch Spannmittel (150) befestigt ist.

6. Strahldüse nach einem der Ansprüche 1 bis 4, wobei der stromabwärtige Flansch des Zwischenrings Stützfüße (232) aufweist, wobei die Füße mit einem oder mehreren Absätzen (224) zusammenwirken, die auf dem stromaufwärtigen Ende (222) des Divergents (220) vorhanden sind.

7. Strahldüse nach Anspruch 6, wobei der Zwischenring (230) auf seiner Fläche (230a), die der Wand (221) des Divergents (220) zugewandt ist, Wülste (238) umfasst, die in einer Umfangsrichtung (DC) voneinander beabstandet sind.

8. Strahldüse nach einem der Ansprüche 1 bis 7, wobei das Divergent aus metallischem Material oder aus Verbundmaterial ist.

## Claims

1. A nozzle (100) having a longitudinal axis (ZZ') comprising a combustion chamber (120) having a downstream end (111) and a divergent (120) formed of a cone-shaped wall (121) extending between an upstream end (122) and a downstream end (123), the upstream end (122) of the divergent being connected to the downstream end (111) of the combustion chamber by an intermediate ring (130) comprising an upstream flange (131) fixed on a fixing flange (112) secured to the combustion chamber (110) and a downstream flange (132) connected to the upstream end (122) of the divergent (120), **characterized in that** the intermediate ring (130) comprises at least one inner channel (133) present between the upstream and downstream flanges (131, 132) of the intermediate ring (130) and **in that** a material able to take heat from the ring is present in said at least one inner channel (133).

2. The nozzle according to claim 1, wherein a heat transfer fluid (160) circulates in said at least one inner channel (133) of the intermediate ring (130).

3. The nozzle according to claim 2, wherein said at least one inner channel (133) has a geometry able to create swirls in the heat transfer fluid (160).

4. The nozzle according to claim 1, wherein a phase change material is present in said at least one inner channel (133) of the intermediate ring (130).

5. The nozzle according to any one of claims 1 to 4, wherein the downstream flange (132) of the intermediate ring (130) is fixed to the upstream end (122) of the divergent (120) by clamping members (150).

6. The nozzle according to any one of claims 1 to 4, wherein the downstream flange of the intermediate ring includes support lugs (232), said lugs cooperating with one or more shoulders (224) present on the upstream end (222) of the divergent (220).

7. The nozzle according to claim 6, wherein the intermediate ring (230) comprises, on its face (230a) opposite the wall (221) of the divergent, (220) bosses (238) spaced from each other along a circumferential direction (DC).

8. The nozzle according to any one of claims 1 to 7, wherein the divergent is made of metallic material or of composite material.
